# EUROPÄISCHE PATENTANMELDUNG

(11) **EP 2 803 559 A2**
(43) Veröffentlichungstag der Anmeldung: **19.11.2014**
(21) Anmeldenummer: 14160411.6
(22) Anmeldetag: 18.03.2014
(51) Int. Cl.: B62D 15/02

(54) **Ausweichassistent für Kraftfahrzeuge**

(30) Priorität: 13.05.2013 DE 102013208727
(71) Anmelder: ROBERT BOSCH GMBH, 70442 Stuttgart (DE)
(72) Erfinder: Kieren, Martin, 71672 Marbach A. N. (DE); Buerkle, Lutz, 70199 Stuttgart (DE); Maurer, Thomas, 91564 Neuendettelsau (DE); Haeussler, Thomas, 74653 Kuenzelsau-Vogelsberg (DE); Braeuchle, Christian, 74855 Hassmersheim - Hochhausen (DE)

(57) **Zusammenfassung**

Ausweichassistent für Kraftfahrzeuge, mit einem sensorischen System (10) zur Erfassung des Verkehrsumfelds des Fahrzeugs, und einer elektronischen Steuereinrichtung (14), in der eine Notausweichfunktion (16) implementiert ist, die anhand der vom sensorischen System (10) gelieferten Daten prüft, ob ein Notausweichmanöver erforderlich ist, und dann über ein aktorisches System (12) auf den Fahrzeugführer und/oder die Dynamik des Fahrzeugs einwirkt, um den Fahrzeugführer bei der Ausführung des Notausweichmanövers zu unterstützen, dadurch gekennzeichnet, dass in der Steuereinrichtung (14) eine Folgefunktion (18) implementiert ist, die anhand der Daten des sensorischen Systems (10) überprüft, ob im Anschluss an das Notausweichmanöver ein Folgemanöver erforderlich werden wird, und, wenn das der Fall ist, den Fahrzeugführer auf diese Notwendigkeit hinweist und/oder ihn bei der Ausführung des Folgemanövers unterstützt.

## Beschreibung

Die Erfindung betrifft einen Ausweichassistenten für Kraftfahrzeuge, mit einem sensorischen System zur Erfassung des Verkehrsumfelds des Fahrzeugs, und einer elektronischen Steuereinrichtung, in der eine Notausweichfunktion implementiert ist, die anhand der vom sensorischen System gelieferten Daten prüft, ob ein Notausweichmanöver erforderlich ist, und dann über ein aktorisches System auf den Fahrzeugführer und/oder die Dynamik des Fahrzeugs einwirkt, um den Fahrzeugführer bei der Ausführung des Notausweichmanövers zu unterstützen.

Die aktive Sicherheit ist einer der Schwerpunkte bei der Entwicklung aktueller und auch zukünftiger Kraftfahrzeugsysteme. Bekannte Sicherheits- oder Fahrerassistenzsysteme im Bereich der aktiven Sicherheit von Kraftfahrzeuginsassen, d.h., zur Unfallvermeidung, sind beispielsweise das elektronische Stabilitätsprogramm ESP (Electronic Stability Programme) zur Stabilisierung des Fahrzeugs durch einen Bremseingriff im fahrdynamischen Grenzbereich, sowie VDM (Vehicle Dynamic Management) als Erweiterung des ESP durch zusätzliche Lenkeingriffe. Eine bekannte Sicherheitseinrichtung eines solchen Sicherheitssystems ist z.B. eine Spurwechsel- oder Ausweichunterstützung für das Kraftfahrzeug.

Ausweichassistenten tragen dem Umstand Rechnung, dass durchschnittliche Kraftfahrzeugführer in Gefahrensituationen oft Probleme haben, durch geeignete Lenkmanöver einem Hindernis auszuweichen. So zeigt sich z.B. in Fahrsicherheitstrainings, dass durch den durchschnittlichen Kraftfahrzeugführer zu spät, zu schnell oder zu langsam, zu viel oder zu wenig oder gar nicht reagiert wird und darüber hinaus ein Gegenlenken, z.B. bei einem doppelten Spurwechsel - wieder zurück auf die ursprüngliche Fahrspur - falsch oder gar nicht ausgeführt wird. Dies führt entweder zu einer Kollision mit einem Hindernis oder zu Instabilitäten, bis hin zu einem Schleudern des Kraftfahrzeugs. Es gibt daher eine Vielzahl von Fahrerassistenzsystemen (FAS oder ADAS (Advanced Driver Assistance Systems)) als elektronische bzw. mechatronische Zusatzeinrichtungen in Kraftfahrzeugen zur Unterstützung des Fahrzeugführers in kritischen Fahrsituationen.

EP 0 970 875 A2 beschreibt ein Sicherheitssystem für Kraftfahrzeuge, durch welches aufgrund von Informationen von Abstandssensoren eine Lenkaktorik einer Steer-bywire-Lenkung eines Kraftfahrzeugs derart beeinflussbar ist, dass ein Kraftfahrzeugführer zumindest daran gehindert werden kann, einen zu einer Kollision führenden Lenkwinkel einzustellen. Hierbei kann das Sicherheitssystem ggf. automatisch einen Ausweichkurs einstellen. Bei diesem Sicherheitssystem wird die Entscheidung, ob, wann und in welche Richtung ausgewichen wird, durch das Sicherheitssystem getroffen und dem Kraftfahrzeugführer abgenommen.

EP 1 735 187 B2 offenbart ein Sicherheitssystem für Kraftfahrzeuge, mit einer Lenk- und einer Bremseinrichtung als aktorischem System, wobei vom Sicherheitssystem die Gefahr einer Kollision mit einem Hindernis erfasst und bewertet wird. Dabei werden Daten des sensorischen Systems ausgewertet, die einerseits Information über die Dynamik und den Zustand des eigenen Fahrzeugs liefern, und andererseits Information über das Verkehrsumfeld, die mit Hilfe von Videosensoren, Radarsensoren und dergleichen gewonnen wird. Falls akute Kollisionsgefahr besteht, wird durch das Sicherheitssystem eine Lenkunterstützung ausgelöst, sobald der Fahrer ein (zu zaghaftes) Ausweichmanöver startet. Dazu wird eine Ausweichtrajektorie berechnet und diese dem Fahrzeugführer in Form eines Lenkmoments, eines haptischen Signals oder eines vom aktorischen System zusätzlich zum Lenkeingriff des Fahrzeugführers erzeugten Zusatzlenkwinkels mitgeteilt. Die durch das Sicherheitssystem vorgegebene Ausweichtrajektorie kann jedoch vom Kraftfahrzeugführer übersteuert werden.

Wenn das Ausweichmanöver abgeschlossen ist, wird der Ausweichassistent wieder deaktivert, unabhängig davon, in welcher Situation sich das Fahrzeug und der Fahrzeugführer dann befinden.

Aufgabe der Erfindung ist es, einen Ausweichassistenten mit verbesserten Sicherheitsfunktionen zu schaffen.

Diese Aufgabe wird dadurch gelöst, dass in der Steuereinrichtung eine Folgefunktion implementiert ist, die anhand der Daten des sensorischen Systems überprüft, ob im Anschluss an das Notausweichmanöver ein Folgemanöver erforderlich werden wird, und, wenn dass der Fall ist, den Fahrzeugführer auf diese Notwendigkeit hinweist und/oder ihn bei der Ausführung des Folgemanövers unterstützt.

Die Erfindung beruht auf der Überlegung, dass die im Zuge eines Notausweichmanövers vorgenommenen Eingriffe oft zu Situationen führen, die, obwohl das Ausweichmanöver an sich erfolgreich ist, ihrerseits Gefahren in sich bergen, so dass weitere Manöver zur Vermeidung dieser Gefahren erforderlich sind, der Fahrzeugführer selbst jedoch durch das Notausweichmanöver so stark in Anspruch genommen ist, dass er die gefährlichen Folgen nicht rechzeitig bemerkt oder beachtet. Die Erfindung schafft deshalb einen Ausweichassistenten, der gewissermaßen einen Schritt weiter denkt und den Fahrer auch bei der Beherrschung der Folgen des Ausweichmanövers unterstützt, wenn das Ausweichmanöver selbst bereits abgeschlossen ist.

Vorteilhafte Ausgestaltungen und Weiterbildungen der Erfindung sind in den Unteransprüchen angegeben.

Im typischen Fall wird das Notausweichmanöver einen Wechsel der Fahrspur beinhalten. Die Folgefunktion überprüft dann, ob diese neue Fahrspur dauerhaft von dem eigenen Fahrzeug befahren werden kann oder ob eine Rückkehr auf die ursprüngliche Fahrspur oder ggf. ein weiterer Spurwechsel auf eine dritte Fahrspur erforderlich ist. Zwar könnte ein solcher nachfolgender Spurwechsel in einigen Fällen auch im Rahmen eines weiteren Notausweichmanövers stattfinden, doch hat die Folgefunktion den Vorteil, dass sie die Verkehrssituation nicht nur anhand der vom sensorischen System gelieferten Daten bewerten kann, sondern auch vorausschauend die Folgen der Eingriffe berücksichtigen kann, die von der zuerst ausgeführten Notausweichfunktion gerade erst vorgenommen werden oder gar erst in der Zukunft vorgenommen werden sollen.

Auch in den Fällen, in denen kein erneuter Spurwechsel erforderlich ist, können Folgemanöver notwendig oder zweckmäßig sein, um die Dynamik des eigenen Fahrzeugs wieder zu stabilisieren.

Für die Einwirkung auf den Fahrer und/oder das Fahrzeug kann die Folgefunktion die gleichen aktorischen Komponenten nutzen, die auch von der Notausweichfunktion benutzt werden, also beispielsweise optische, akustische oder haptische Hinweise an den Fahrer oder direkte Eingriffe in die Lenkung oder das Antriebs- oder Bremssystem.

Im folgenden wird ein Ausführungsbeispiel anhand der Zeichnung näher erläutert.

Es zeigen:
- Fig. 1: ein Blockdiagramm eines erfindungsgemäßen Ausweichassistenten;
- Fig. 2 bis 5: Diagramme von Verkehrssituationen zur Erläuterung der Funktionsweise des Ausweichassistenten; und
- Fig. 6: ein Flussdiagramm zur Erläuterung der Arbeitsweise des Ausweichassistenten.

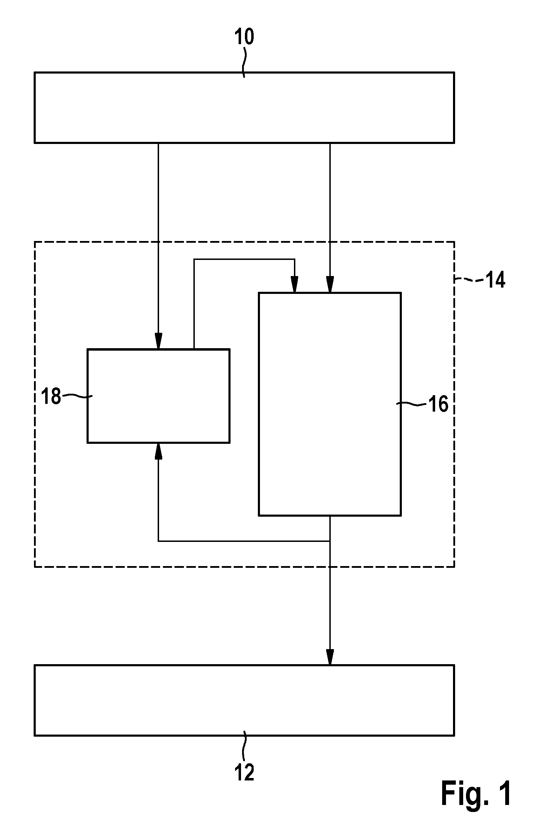

Der in Fig. 1 als Blockdiagramm dargestellte Ausweichassistent umfasst ein sensorisches System 10, ein aktorisches System 12 und eine elektronische Steuereinrichtung 14 beispielsweise in der Form eines oder mehrerer Mikroprozessoren, die die vom sensorischen System 10 gelieferten Daten auswertet und verarbeitet und als Ergebnis dieser Verarbeitung Befehle an das aktorische System 12 ausgibt.

Das sensorische System 10 umfasst einerseits Sensorkomponenten, die den dynamischen Zustand des eigenen Fahrzeugs erfassen, also beispielsweise dessen Geschwindigkeit, Beschleunigung, Giergeschwindigkeit, Getriebezustand, Schlupf der Antriebsräder und dergleichen. Dazu können auch Komponenten gehören, die den Zustand des Fahrzeugführers erfassen, beispielsweise Ermüdungssensoren. Weiterhin umfasst das sensorische System 10 Sensorkomponenten, die das Umfeld des Fahrzeugs umfassen, beispielsweise Videosysteme mit zugehöriger elektronischer Bildverarbeitung, Radarsensoren, Ultraschallsensoren und dergleichen. Im weiteren Sinne können zum sensorischen System 10 auch Informationsquellen gerechnet werden, die in anderer Weise Informationen über das Verkehrsumfeld und insbesondere die Verkehrsinfrastruktur bereitstellen, beispielsweise Daten eines Navigationssystems oder gespeicherter Karten.

In der Steuereinrichtung 14 ist eine Notausweichfunktion 16 implementiert, die in bekannter Weise anhand der vom sensorischen System 10 gelieferten Daten die aktuelle Verkehrssituation bewertet und eine Wahrscheinlichkeit für den Eintritt einer Kollision mit einem anderen Fahrzeug oder einem sonstigen Hindernis berechnet. Wenn diese Wahrscheinlichkeit einen bestimmten Wert erreicht, gibt die Notausweichfunktion 16 Befehle an das aktorische System 12 aus, um ein Notausweichmanöver auszulösen, sei es durch entsprechende Hinweise an den Fahrer oder durch aktiven Eingriff in die Dynamik des Fahrzeugs.

Dementsprechend umfasst das aktorische System 12 in einer Ausführungsform Einrichtungen zur Übermittlung von Informationen an den Fahrer und in einer anderen Ausführungsform Einrichtungen für den aktiven Eingriff in die Lenkung, das Antriebssystem und/oder das Bremssystem des eigenen Fahrzeugs. In einer weiteren (bevorzugten) Ausführungsform ist das aktorische System 12 in der Lage, sowohl Informationen an den Fahrer zu übermitteln als auch aktiv in die Fahrzeugdynamik einzugreifen. Die Übermittlung von Informationen an den Fahrer kann beispielsweise mit Hilfe von optischen Anzeigen, z.B. einem Head-Up-Display oder akustisch mit Hilfe von Lautsprechern erfolgen. Ebenso sind auch Einrichtungen zur Übermittlung von haptischen Signalen an den Fahrer möglich, beispielsweise richtungsgebundene Vibrationen oder Rütteln am Lenkrad. Es sind auch "hybride" Einrichtungen möglich, die sowohl für Eingriffe in die Fahrzeugdynamik als auch zur Übermittlung von Informationen an den Fahrzeugführer genutzt werden können, beispielsweise in der Form von kurzen Lenkmomenten oder Lenkeinschlägen oder kurzen Lenkaktionen durch asymmetrisches Abbremsen der linken und rechten Fahrzeugräder, in der Form eines Bremsruckes oder dergleichen.

In der Steuereinrichtung 14 ist weiterhin eine Folgefunktion 18 implementiert, die ihrerseits Daten auswertet, die vom sensorischen System 10 geliefert werden, aber zusätzlich auch von der Notausweichfunktion 16 Informationen erhält, die angeben, welche Aktionen von der Notausweichfunktion 16 derzeit ausgeführt werden oder geplant sind. Anders als die Notausweichfunktionen 16 bewertet die Folgefunktion 18 nicht die aktuelle Verkehrssituation, sondern vielmehr die Situation, die sich voraussichtlich als Folge des Notausweichmanövers in naher Zukunft ergeben wird. Anhand der Bewertung dieser erwarteten Situation entscheidet dann die Folgefunktion 18, ob ein Folgemanöver erforderlich ist, um nachteilige Folgen des Ausweichmanövers abzuwenden. Sofern ein Folgemanöver erforderlich ist, liefert die Folgefunktion 18 entsprechende Befehle entweder direkt an das aktorische System 12 oder - wie im hier gezeigten Beispiel - an die Notausweichfunktion 16, so dass deren Funktionalität auch für das Folgemanöver genutzt werden kann.

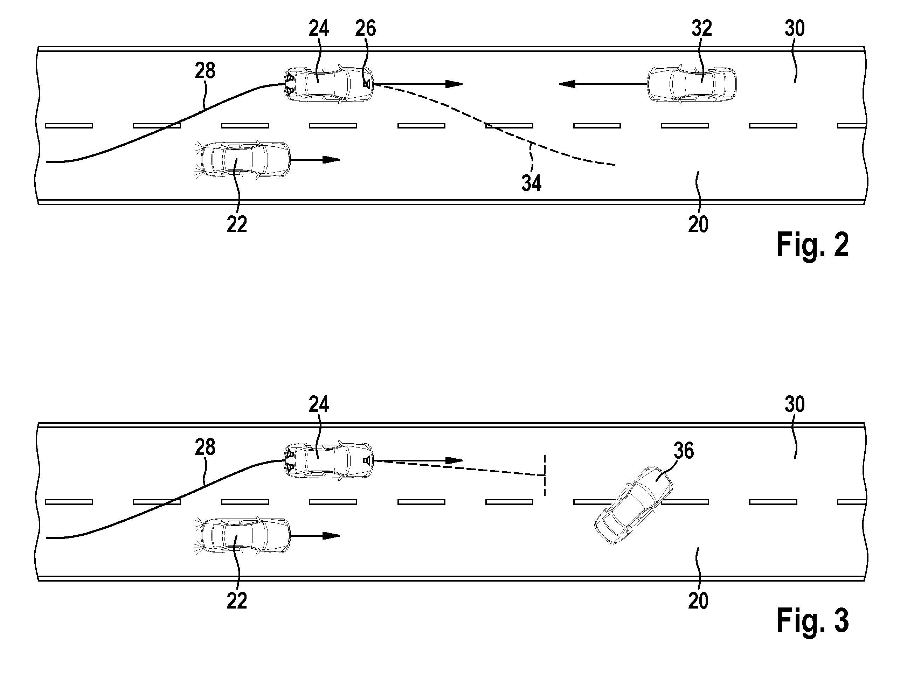

Zur Illustration der Arbeitsweise des Ausweichassistenten werden nun anhand der Fig. 2 bis 5 einige Fallbeispiele erläutert.

In Fig. 2 wird eine Spur 20 einer einspurigen Straße (einer Straße mit nur einer Spur je Fahrtrichtung) durch ein liegengebliebenes Fahrzeug 22 blockiert. Ein Fahrzeug 24 ist mit dem erfindungsgemäßen Ausweichassistenten ausgerüstet, was hier durch schematisch eingezeichnete Radarsensoren 26 symbolisiert wird. Die Notausweichfunktion 16 hat das liegengebliebene Fahrzeug 22 erkannt und daraufhin ein Ausweichmanöver eingeleitet, bei dem das Fahrzeug 24 durch aktiven Eingriff in die Lenkung auf einer Ausweichtrajektorie 28 auf eine Gegenspur 30 gelenkt wurde.

In der in Fig. 2 gezeigten Situation hat das eigene Fahrzeug 24 gerade das liegengebliebene Fahrzeug 22 passiert. Die Folgefunktion 18 erkennt, dass sich auf der Gegenspur 30 ein entgegenkommendes Fahrzeug 32 nähert, und löst daraufhin ein Folgemanöver aus, bei dem das eigene Fahrzeug 24 auf einer Folgetrajektorie 34 auf die Spur 20 zurück gelenkt wird. Die Folgefunktion 18 kann dabei schon während des ursprünglichen Ausweichmanövers aktiv werden und beispielsweise durch Eingriff in das Antriebssystem bewirken, dass das Fahrzeug 24 schon bei dem Wechsel auf die Gegenspur 30 stärker beschleunigt wird, damit das liegengebliebene Fahrzeug 22 schneller passiert wird und die Rückkehr auf die Spur 20 so rechtzeitig erfolgen kann, dass eine Kollision mit dem entgegenkommenden Fahrzeug 32 vermieden wird.

Fig. 3 illustriert eine abgewandelte Situation, bei der sich auf der Gegenspur 30 kein Fahrzeug nähert, sondern stattdessen beide Spuren 20 und 30 durch ein quer stehendes Fahrzeug 36 blockiert sind. Das Folgemanöver besteht in diesem Fall darin, dass vorzugsweise schon während des Ausweichmanövers, also auf der Ausweichtrajektorie 28, eine Notbremsung ausgelöst wird, die das Fahrzeug 24 rechtzeitig auf der Gegenspur 30 zum Stillstand bringt. Bei diesem Folgemanöver werden unnötige Lenkeinschläge, beispielsweise ein Zurücklenken auf die Spur 20, vermieden, und der Bremseingriff wird während des Ausweichmanövers so geregelt, dass die Fahrstabilität erhalten bleibt.

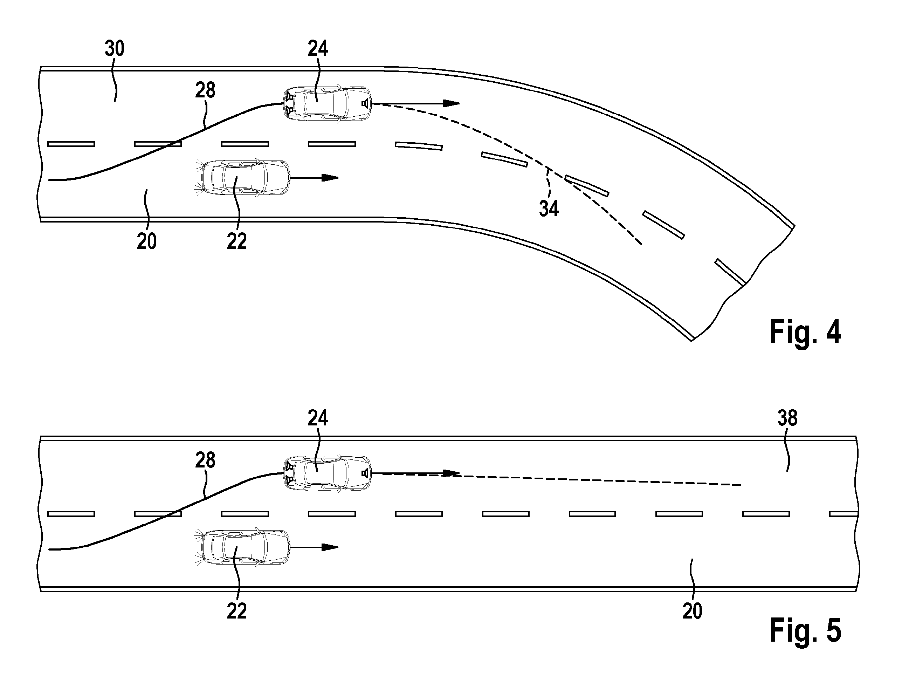

In Fig. 4 erkennt die Folgefunktion 18, dass die Fahrbahn hinter dem liegengebliebenen Fahrzeug 22 einen gekrümmten Verlauf hat, so dass die Folgetrajektorie 34 entsprechend modifiziert werden muss. Der Verlauf der Folgetrajektorie 34 und die Geschwindigkeit des Fahrzeugs 24 werden dabei automatisch so angepasst, dass die Rückkehr auf die Spur 20 so schnell wie möglich erfolgt, jedoch unter Beachtung der Erfordernisse der Fahrstabilität.

In Fig. 5 führt das Ausweichmanöver nicht auf eine Gegenspur 30, sondern auf die linke Spur 38 einer mehrspurigen Richtungsfahrbahn. In diesem Fall erkennt die Folgefunktion 18 beispielsweise anhand der Daten einer elektronisch gespeicherten Karte eines Navigationssystems, dass das Fahrzeug 24 sich auf einer mehrspurigen Straße befindet und somit ein Zurücklenken auf die ursprünglich befahrene Spur 20 nicht erforderlich ist. In dem Fall findet ein Folgemanöver entweder gar nicht statt oder nur in einem eingeschränkten Umfang, soweit es erforderlich ist, um nach Abschluss des Ausweichmanövers die Fahrstabilität des Fahrzeugs wiederherzustellen.

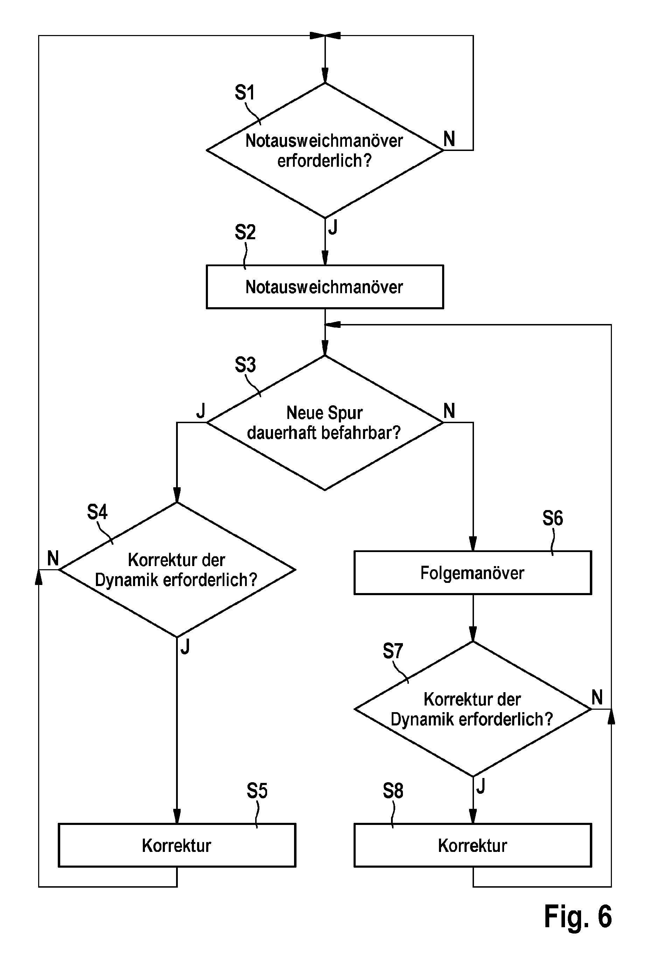

In Fig. 6 sind die wesentlichen Funktionen des Ausweichassistenten in einem Flussdiagramm dargestellt.

In Schritt S1 wird anhand der Daten des sensorischen Systems 10 geprüft, ob ein Notausweichmanöver erforderlich ist. Solange das nicht der Fall ist, wird dieser Schritt zyklisch wiederholt. Wenn sich in Schritt S1 die Notwendigkeit eines Notausweichmanövers ergibt, so wird dieses Manöver in Schritt S2 entweder automatisch ausgeführt oder durch entsprechende Hinweise an den Fahrzeugführer veranlasst. Sofern das Notausweichmanöver mit einem Wechsel der Fahrspur verbunden ist, wird in Schritt S3 geprüft, ob die neue Spur dauerhaft befahrbar ist. Wenn kein Spurwechsel stattfindet, so lautet die Antwort auf diese Abfrage "nein" (N). Der Schritt S3 wird ausgeführt, sobald in Schritt S2 entschieden wurde, dass ein Notausweichmanöver stattfinden soll, also nicht erst, wenn das Notausweichmanöver wirklich abgeschlossen ist.

Bei positivem Ergebnis (J) der Abfrage in Schritt S3 wird in einem Schritt S4 lediglich geprüft, ob noch Eingriffe in die Lenkung und/oder das Brems- und Antriebssystem erforderlich sind, um das Fahrzeug nach Abschluss des Notausweichmanövers wieder dynamisch zu stabilisieren. Dieser Fall entspricht dem in Fig. 5 dargestellten Fallbeispiel. Wenn keine Korrektur der Dynamik erforderlich ist (N) findet kein Folgemanöver statt, und es erfolgt ein Rücksprung zu Schritt S1. Falls eine Korrektur der Dynamik erforderlich ist (J) findet diese Korrektur in einem eingeschränkten Folgemanöver in Schritt S5 statt und erst dann erfolgt der Rücksprung zu Schritt S1.

Wenn in Schritt S3 festgestellt wird, dass die neue Spur nicht dauerhaft befahrbar ist (N; Fallbeispiele nach Fig. 2 bis 4) so wird in Schritt S6 je nach Situation ein geeignetes Folgemanöver veranlasst. In einem nachfolgenden Schritt S7 wird ähnlich wie in Schritt S4 geprüft, ob durch das Folgemanöver eine Destabilisierung des eigenen Fahrzeugs eingetreten ist und dementsprechend eine Korrektur der Dynamik erforderlich ist. Wenn dies nicht der Fall ist, erfolgt ein Rücksprung zu Schritt S3, andernfalls erfolg der Rücksprung, nachdem in Schritt S8 eine entsprechende Korrektur veranlasst wurde. In den in Fig. 2 bis 4 dargestellten Fallbeispielen würde somit eine erneute Abfrage in Schritt S3 stattfinden, nachdem das eigene Fahrzeug wieder auf die Spur 20 zurückgekehrt ist. Dementsprechend wäre die Antwort "ja" (J), und über die Schritte S4 und ggf. S5 würde das System zum Ausgangszustand (Schritt S1) zurückkehren.

## Patentansprüche

1. Ausweichassistent für Kraftfahrzeuge, mit einem sensorischen System (10) zur Erfassung des Verkehrsumfelds des Fahrzeugs (24), und einer elektronischen Steuereinrichtung (14), in der eine Notausweichfunktion (16) implementiert ist, die anhand der vom sensorischen System (10) gelieferten Daten prüft, ob ein Notausweichmanöver (S2) erforderlich ist, und dann über ein aktorisches System (12) auf den Fahrzeugführer und/oder die Dynamik des Fahrzeugs (24) einwirkt, um den Fahrzeugführer bei der Ausführung des Notausweichmanövers zu unterstützen, **dadurch gekennzeichnet, dass** in der Steuereinrichtung (14) eine Folgefunktion (18) implementiert ist, die anhand der Daten des sensorischen Systems (10) überprüft, ob im Anschluss an das Notausweichmanöver (S2) ein Folgemanöver (S6) erforderlich werden wird, und, wenn das der Fall ist, den Fahrzeugführer auf diese Notwendigkeit hinweist und/oder ihn bei der Ausführung des Folgemanövers unterstützt.

2. Ausweichassistent nach Anspruch 1, bei dem die Steuereinrichtung (14) dazu ausgebildet ist, die Folgefunktion (18) bereits zu aktivieren, bevor das Notausweichmanöver abgeschlossen ist.

3. Ausweichassistent nach Anspruch 1 oder 2, bei dem die Folgefunktion eine Überprüfung (S3) einschließt, ob im Zuge des Notausweichmanövers ein Spurwechsel stattfindet und die neue Spur dauerhaft befahrbar ist, und bei dem, wenn die neue Spur nicht dauerhaft befahrbar ist, das Folgemanöver einen erneuten Spurwechsel einschließt.
